**Europäisches Patentamt**

**European Patent Office**

**Office européen des brevets**

(19)

(11) Veröffentlichungsnummer: **0 084 598**
A1

# (12) EUROPÄISCHE PATENTANMELDUNG

(21) Anmeldenummer: **82108948.9**

(22) Anmeldetag: **28.09.82**

(51) Int. Cl.³: **F 01 N 1/08**

(30) Priorität: **26.01.82 DE 3202373**

(43) Veröffentlichungstag der Anmeldung: **03.08.83**
**Patentblatt 83/31**

(84) Benannte Vertragsstaaten: **DE FR IT SE**

(71) Anmelder: **Knorr-Bremse GmbH, Moosacher Strasse 80, D-8000 München 40 (DE)**

(72) Erfinder: **Schuhbeck, Christian, Schopfgraben 21, D-8160 Miesbach (DE)**
Erfinder: **Sternitzke, Eberhard, Bechtholsheimstrasse 17, D-8000 München 50 (DE)**
Erfinder: **Unger, Hans, St. Benediktstrasse 7, D-8044 Unterschleissheim (DE)**

(54) **Schalldämpfer, insbesondere für Druckluftgeräte.**

(57) Bei einem Schalldämpfer, insbesondere für Druckluft-geräte, ist in einem Gehäuse ein zur Schalldämpfung die-nender Einsatz (13) vorgesehen, welcher als ein an beiden Enden offener Rohrkörper besteht; dieser ist durch zumin-dest eine durchgehende Trennwand (21) in wenigstens zwei Abschnitte (17, 19) unterteilt und besitzt einen radialen Ab-stand von der Innenwand des ihn aufnehmenden Gehäuses (7). Die Abschnitte weisen jeweils vorzugsweise in Längs-richtung sich erstreckende Durchbrechungen auf, derart, daß für die Gehäuse in Längsrichtung durchströmende Luft jeweils eine Strömungsverbindung zwischen dem Inneren der Abschnitte und dem Ringraum (27) besteht, welcher zwischen der Innenwand des Gehäuses und dem Außenum-fang des Einsatzes (13) vorgesehen ist.

EP 0 084 598 A1

Knorr-Bremse GmbH
Moosacher Str. 80
8000 München 40

München, den 21.01.1982
TP1-hn/fe
- 1685 -

Schalldämpfer, insbesondere für Druckluftgeräte

_____

Die Erfindung betrifft einen Schalldämpfer nach dem
Gattungsbegriff des Anspruches 1.

Bei Druckluftanlagen, insbesondere bei in Kraftfahrzeugen
verwendeten Druckluftanlagen, ist in zunehmendem Maße
ausreichende Geräuschdämpfung erwünscht und auch bereits
vorgeschrieben; aus diesem Grund werden z.B. für Bremsanlagen vorgesehene Druckluftbeschaffungsanlagen und/oder
durch Druckluft gespeiste Geräte mit Schalldämpfern versehen, bei welchen im allgemeinen innerhalb eines Gehäuses
Prallwände bzw. Umlenkkörper vorgesehen sind (GM 78 03 059;
deutsche Patentschrift 1 175 501). Schalldämpfer der
genannten Art sind zur Erzielung ausreichender Dämpfung
im allgemeinen verhältnismäßig kompliziert aufgebaut
(deutsche Patentschrift 1 175 501) bzw. besitzen eine
Abblasrichtung quer zur Längsrichtung des Schalldämpfergehäuses, wobei das Abblasen über eine Vielzahl von Querbohrungen vollzogen wird (GM 78 03 059 und DE-OS 22 53 995).

Davon ausgehend besteht die Aufgabe der Erfindung darin,
einen baulich besonders einfachen und billig herzustellenden Schalldämpfer, insbesondere für Druckluftanlagen
von Schienen- und Kraftfahrzeugen zu schaffen, welcher
dennoch ausgezeichnete Dämpfungseigenschaften besitzen
soll und bei welchem die Expansion bzw. der Austritt
aus dem Dämpfergehäuse in Längsrichtung desselben stattfindet, also quer zur Einbaulage des den Schalldämpfer tragenden Druckluftgerätes.

Zur Lösung dieser Aufgabe dienen die Merkmale nach dem Kennzeichnungsteil des Patentanspruches 1.

Der Schalldämpfer nach der Erfindung ist trotz baulich einfacher und billiger Gestaltung sehr wirksam, d.h. es wird ausreichende Geräuschdämpfung erreicht, wobei die Druckluft innerhalb des Schalldämpfergehäuses mehrfach umgelenkt wird und hierbei mehrfacher Expansion unterliegt. Der im Gehäuse des Schalldämpfers gehalterte Einsatz kann als ein äußerst billiges Teil gefertigt werden, wobei gemäß einer vorteilhaften Weiterbildung der strömungsaufwärts liegenden Bereich des Einsatzes gleichzeitig zur Halterung eines Ventilmechanismus verwendet werden kann, so eines Auslaßventils, wenn der Schalldämpfer an einem Druckregler z.B. für Fahrzeuge angeschlossen ist.

Vorteilhafte Ausgestaltungen und Weiterbildungen sind in weiteren Ansprüchen aufgeführt.

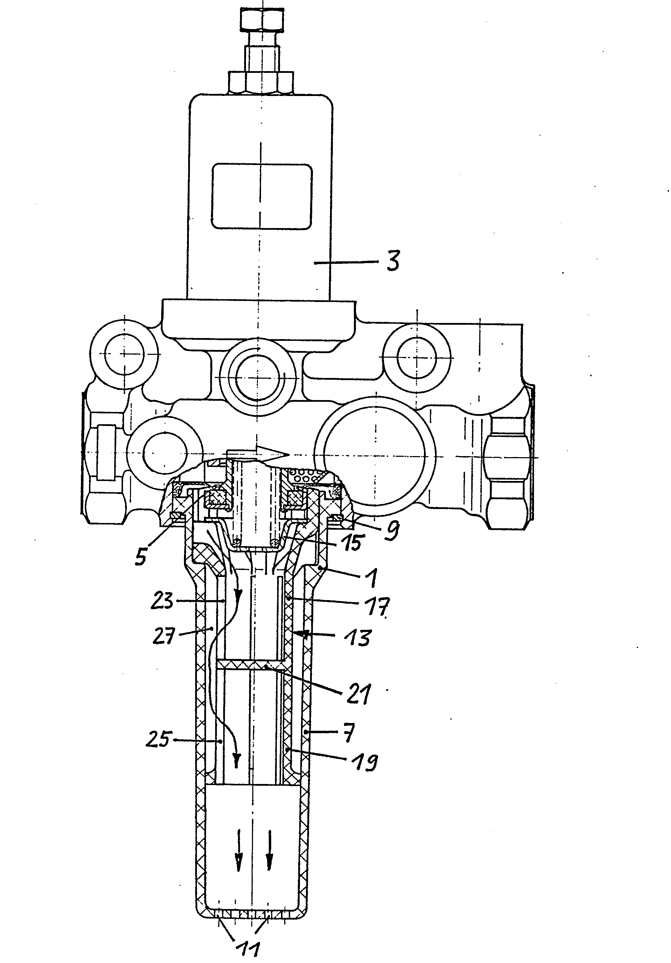

Die Erfindung ist nachfolgend anhand eines Ausführungsbeispiels unter Bezugnahme auf die beigefügte Zeichnung erläutert. Diese gibt in Teil-Schnittansicht einen an einem Druckregler angeordneten Schalldämpfer gemäß der Erfindung wieder.

Der in der Zeichnung dargestellte Schalldämpfer 1 gemäß der vorliegenden Erfindung ist beispielsweise an einem Druckregler 3 montiert wiedergegeben. Bei dieser Verwendung des Schalldämpfers ist dieser an der Unterseite des Druckreglers 3 angebracht und umschließt hierbei das Auslaßventil 5 des Druckreglers, welches in an sich bekannter Weise bei Übersteigen eines vorbestimmten Druckes wirksam wird, derart, daß die von einem an den Druckregler angeschlossenen (nicht dargestellten) Kompressor geförderte
Luft über das Auslaßventil 5 und den Schalldämpfer 1 ins
Freie bläst.

Der Schalldämpfer 1 weist ein äußeres Gehäuses 7 auf,
welches mittels eines Sprengringes 9 oder dergleichen Befestigungsmitteln an der Unterseite des Druckreglers
fixierbar ist. Das Gehäuse 7 kann aus einem Druckgußteil bestehen, es kann auch aus einem geeigneten Kunststoff gefertigt werden. An der Unterseite (gemäß Darstellung) des Gehäuses 7 sind Auslaßöffnungen 11 vorgesehen, durch welche die vom Kompressor geförderte Luft
(bei Übersteigen eines vorbestimmten Druckes) ins Freie
gelangt.

Innerhalb des Gehäuses 7 befindet sich ein Einsatz 13,
dessen oberes Teil im dargestellten Ausführungsbeispiel
verwendet wird, um einen Federteller 15 des Auslaßventils
5 zu haltern. Wie die Teil-Schnittansicht erkennen läßt,
ist das obere Teil des Einsatzes 13 teilweise geschlitzt
bzw. mit Durchbrechungen versehen, so daß ein ausreichender
Durchlaß für die das geöffnete Auslaßventil 5 passierende Druckluft in Richtung des Inneren des Schalldämpfers 1 sichergestellt ist. Der Schalldämpfer nach der
vorliegenden Erfindung ist nicht auf die dargestellte
zusätzliche Funktion im Bereich des oberen Teils beschränkt,
d.h. das Auslaßventil 5 kann auch durch andere bauliche
Mittel gesichert sein. Der Einsatz 13 besteht hinsichtlich
seiner Dämpferfunktion im wesentlichen aus zwei Abschnitten
17 und 19, d.h. aus dem oberen Abschnitt 17 (gemäß Darstellung) und dem unteren Abschnitt 19. Die beiden Abschnitte sind durch eine durchgehende Trennwand 21 voneinander getrennt. Die Teil-Schnittansicht des Ausführungsbeispiels nach der vorliegenden Erfindung läßt erkennen, daß sowohl der obere Abschnitt 17 als auch der untere Abschnitt 19 unter vorbestimmten Winkelabständen bestehende Längsschlitze 23 und 25 aufweisen, so daß durch die Längsschlitze hindurch eine Verbindung zwischen dem Inneren des Abschnitts 17 bzw. 19 und dem Ringraum 27 besteht, welcher radial außerhalb der beiden Abschnitte den Einsatz umgibt und durch die Innenwandung des Gehäuses 7 begrenzt ist.

Die Wirkungsweise des Schalldämpfers ist wie folgt:

Öffnet das Auslaßventil 5 des Druckreglers 3, so strömt die Druckluft nach Passieren des oberen Teils des Einsatzes 13 in den Abschnitt 17 ein und kann aus diesem Abschnitt radial nach außen expandieren, d.h. die Druckluft gelangt durch die Längsschlitze 23 des Abschnittes 17 in den Ringraum 27, von welchem sie in Strömungsrichtung unterhalb der Trennwand 21 wieder in den Abschnitt 19 zurückströmt. Auch hierbei passiert die Druckluft die hierfür vorgesehenen Längsschlitze. Nach Ausströmen aus dem Abschnitt 19, dessen Querschnitt enger ist als der Querschnitt des den Einsatz aufnehmenden Gehäuses 7, unterliegt die Druckluft wiederum einer gewissen Expansion, wonach sie aus den Auslaßöffnungen 11 des Schalldämpfers 1 entweicht. Durch die mehrfache Umlenkung und Expansion der Druckluft beim Passieren des Schalldämpfereinsatzes wird eine ausgezeichnete Schalldämpfung erreicht, d.h. das sogenannte Expansionsgeräusch bei Auftreffen der Druckluft auf die Atmosphäre, ist beträchtlich reduzierbar. Für gewisse Anwendungsfälle hat es sich als zweckmäßig erwiesen, das Gehäuse 7 aus einem dämpfenden Material zu fertigen, z.B. aus einem Kunststoff ausreichender Elastizität. Es ist auch möglich, die Längsschlitze 23 und 25 winkelversetzt zueinander am oberen Abschnitt 17 und am unteren Abschnitt 19 vorzusehen, z.B. derart, daß die unteren Längsschlitze 25 in ihrer Projektion zwischen den oberen Längsschlitzen 23 beginnen.

Die Erfindung ist nicht auf die dargestellte Ausführungsform eines aus zwei Abschriften bestehenden Einsatzes beschränkt, d.h. der Einsatz kann bei Verwendung mehrerer Zwischenwände auch aus mehreren Abschnitten bestehen, welche jeweils Verbindung mit dem radial außerhalb bestehenden Ringraum besitzen.

0084598

Knorr-Bremse GmbH
Moosacher Str. 80
8000 München 40

München, den 21.01.1982
TP1-hn/fe
- 1685-

Patentansprüche

1. Schalldämpfer, insbesondere für Druckluftgeräte, mit einem in einem Schalldämpfergehäuse befindlichen Einsatz, durch welchen die den Schalldämpfer durchströmende Druckluft eine Umlenkung erfährt, dadurch gekennzeichnet, daß der Einsatz (13) als ein innerhalb des Gehäuses (7) des Schalldämpfers (1) unter radialem Abstand von der Gehäuseinnenwand gehalterter, an beiden Enden offener Rohrkörper besteht, welcher zwischen seinen Enden durch eine quer verlaufende, durchgehende Trennwand (21) in einen bezüglich der Strömungsrichtung der abblasenden Druckluft strömungsaufwärts und einen strömungsabwärts angeordneten Abschnitt (17, 19) unterteilt ist, und daß beide Abschnitte (17, 19) des Einsatzes (13) dessen Wand durchsetzende Durchbrechungen aufweisen, derart, daß jeweils eine Strömungsverbindung zwischen dem Inneren der beiden Abschnitte und dem Ringraum (27) besteht, welcher zwischen dem Außenumfang des Einsatzes und der Innenwand des Gehäuses (7) vorgesehen ist.

2. Schalldämpfer nach Anspruch 1, dadurch gekennzeichnet, daß die Durchbrechungen als Längsschlitze (23, 25) bestehen, welche jeweils unter Winkelabstand die Wandung der Abschnitte (17, 19) des Einsatzes durchsetzen.

3. Schalldämpfer nach Anspruch 2, dadurch gekennzeichnet, daß die Längsschlitze (23) des einen Abschnittes winkelver-

- 2 -

0084598

setzt zu den Längsschlitzen (25) des anderen Abschnittes vorgesehen sind.

4. Schalldämpfer nach Anspruch 1, dadurch gekennzeichnet, daß das Auslaßende des den Einsatz (13) aufnehmenden Gehäuses (7) als ein durch Auslaßöffnungen (11) durchsetzter Wandteil ausgebildet ist.

5. Schalldämpfer nach einem der vorangehenden Ansprüche, bei Verwendung an einem an einen Kompressor angeschlossenen Druckregler, dadurch gekennzeichnet, daß das in Strömungsrichtung strömungsaufwärts befindliche Ende des Einsatzes (13) als Haltevorrichtung für das Auslaßventil (5) des Druckreglers vorgesehen ist.

Europäisches
Patentamt

**EUROPÄISCHER RECHERCHENBERICHT**

00084598
Nummer der Anmeldung

EP 82 10 8948

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A- 146 837 (SCHNEEBELI) <br> * Seite 1, Zeile 62 bis Seite 2, Zeile 11; Figuren 1,2 * | 1 | F 01 N 1/08 |
| X | US-A-3 545 565 (McCAFFREY) <br> * Spalte 1, Zeile 58 - Spalte 2, Zeile 16; Figuren 1,2 * | 1 | |
| X | US-A-3 381 774 (STADE) <br> * Spalte 4, Zeilen 29 - 70; Figuren 4,5 * | 1 | |
| X | DE-A-2 308 360 (STEEL-GRIP) <br> * Seite 9, Zeile 18 - Seite 10, Zeile 24; Figur 4 * | 1 | |

RECHERCHIERTE
SACHGEBIETE (Int. Cl. 3)

F 01 N
F 16 L

Der vorliegende Recherchenbericht wurde für alle Patentansprüche erstellt.

| Recherchenort <br> DEN HAAG | Abschlußdatum der Recherche <br> 30-03-1983 | Prüfer <br> SCHMID R. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82